(19) Europäisches Patentamt / European Patent Office / Office européen des brevets

(11) **EP 4 579 184 A1**

(12) **EUROPEAN PATENT APPLICATION**
published in accordance with Art. 153(4) EPC

(43) Date of publication:
02.07.2025 Bulletin 2025/27

(21) Application number: 23872512.1

(22) Date of filing: 28.09.2023

(51) International Patent Classification (IPC):
*G01C 15/00* (2006.01)

(52) Cooperative Patent Classification (CPC):
G01C 15/00

(86) International application number:
PCT/JP2023/035366

(87) International publication number:
WO 2024/071290 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 JP 2022157331

(71) Applicant: TOPCON CORPORATION
Tokyo 174-8580 (JP)

(72) Inventors:
• KIKUCHI, Takeshi
 Tokyo 174-8580 (JP)
• TAKANO, Yuji
 Tokyo 174-8580 (JP)

(74) Representative: Schmitt-Nilson Schraud Waibel
Wohlfrom
Patentanwälte Partnerschaft mbB
Pelkovenstraße 143
80992 München (DE)

(54) **SURVEYING SYSTEM AND LASER RECEIVER**

(57) An instrument height of a surveying instrument is measured with a laser-light receiver. A survey system (1) includes a rotating laser device (10) that horizontally emits laser light (LB) at a height (H) from a measurement reference point (RP2), a surveying instrument (30) installed at another measurement reference point (RP1), and a laser-light receiver (20) fixed to a front surface of the surveying instrument, in which the laser-light receiver includes light receiving units at both ends of a light guide, and a first vertical light-receiving tube (23), a second vertical light-receiving tube (25), and a horizontal light-receiving tube (24) provided in an H shape, specifies a collision position (235) of the laser light from each of light reception signals of the light receiving units, detects a difference distance from a center position and whether the difference distance is on a positive side or a negative side with respect to the center position, and measures an instrument height (h) of the surveying instrument from a height (H) of the laser light, a center separation distance (d1) between a light receiver center (RC) of the light receiver and an instrument center (MC) of the surveying instrument, and the difference distance, according to a combination of positive and negative difference distances.

FIG. 2

EP 4 579 184 A1

## Description

Technical Field

The present invention relates to laser-light receivers that receive horizontal laser light from a rotating laser device.

Background

Surveying work in various constructions such as building, civil engineering, and interior construction uses rotating laser devices and laser-light receivers for leveling. The rotating laser device includes a rotating head which has a laser light source. The rotating laser device is installed at a measurement reference point and transmits laser light at a reference height while horizontally rotating. The laser-light receiver includes a detection body provided with a light receiving sensor. The laser-light receiver receives the laser light and detects a collision position of the laser light, to acquire a position in a height direction (vertical direction) of the laser-light receiver with respect to the laser light. Patent Literature 1 discloses a laser-light receiver which includes a plurality of photodiodes around a vertical axis as a light receiving sensor, and the light receiving sensor is configured to move in a vertical direction to calculate a height difference of a measurement point from a measurement reference point.

In surveying work, a surveying instrument such as a total station or a three-dimensional scanner is used. Measuring a measurement object with such a surveying instrument may require measuring an instrument height from an installation surface where the surveying instrument is installed to the instrument center. The instrument height is usually manually measured by an operator with, for example, a measuring tape, but manual measurements tend to produce measurement error. On the other hand, Patent Literature 2 discloses a surveying instrument that includes a telescope and measures an instrument height of the surveying instrument by directing the telescope of the surveying instrument obliquely downward and measuring an installation surface of the surveying instrument with distance-measuring light without a prism.

Citation List

Patent Literature

Patent Literature 1: JP 2020-169921 A1
Patent Literature 2: JP 2017-181427 A1

Summary

Technical Problem

Rotating laser devices and laser-light receivers are often used for the purpose of leveling in surveying sites, and surveying instruments are often used for the purpose of measuring coordinates of measurement points in surveying sites. The inventors considered using these instruments often used in the surveying sites to measure the instrument height of the surveying instrument.

The present invention has been made to solve the above problems, and an objective thereof is to measure an instrument height of a surveying instrument by using a laser-light receiver that receives horizontal laser light from a rotating laser device and performs leveling.

Solution to Problem

In order to solve the above problem, according to a first aspect of the present invention, there is provided a survey system comprising: a rotating laser device configured to horizontally emit laser light at a certain height from a certain measurement reference point; a surveying instrument installed at another measurement reference point and having an instrument height from the another reference point to an instrument center; and a laser-light receiver configured to be fixed to a front surface of the surveying instrument and to receive the laser light, wherein the laser-light receiver includes, as light receiving sensors, a first vertical light-receiving tube, a second vertical light-receiving tube, and a horizontal light-receiving tube, the first and second vertical light-receiving tubes, and the horizontal light-receiving tube, each having a columnar light guide, light receiving units disposed at both ends of the light guide, a light coupling layer configured to divide the laser light toward the both ends of the light guide, and the first vertical, the second vertical and the horizontal light-receiving tubes being disposed in an H-shape, and an arithmetic processing unit connected to the light receiving units, and wherein the arithmetic processing unit is configured to specify a collision position of the laser light from each of light reception signals of the light receiving units, and detect a difference distance from the center position to the collision position and whether the difference distance is on a positive side or a negative side with respect to a center position of a length of the light guide, and measures the instrument height of the surveying instrument based on the height of the laser light, a center separation distance between a light-receiver center of the laser-light receiver and the instrument center of the surveying instrument in a vertical direction, and the difference distance according to a combination of the positive and negative difference distances on the first vertical light-receiving tube, the second vertical light-receiving tube, and the horizontal light-receiving tube.

According to a survey system of a second aspect, in the first aspect, the arithmetic processing unit calculates the instrument height based on a sum of the difference distances on the first and second light-receiving tubes, the height of the laser light, and the center separation distance when the difference distances on the first vertical light-receiving tube and the second vertical light-receiving have the same values and both are negative (Numerical Formula 1), and calculates the instrument height by subtracting an absolute value of the difference distance from a sum of the height of the laser light and the center separation distance when the difference distances on the first vertical light-receiving tube and the second vertical light-receiving tube have the same values and both are positive (Numerical Formula 2).

According to the survey system of a third aspect, wherein the arithmetic processing unit calculates the instrument height by subtracting a height change of the light receiver center obtained by using a trigonometric function of an absolute value of the difference distance on the horizontal light-receiving tube from a sum of the height of the laser light and the center separation distance when the difference distance on the first vertical light-receiving tube is positive, the difference distance on the second vertical light-receiving tube is negative, and the difference distance on the horizontal light-receiving tube is positive, or when the difference distance on the first vertical light-receiving tube is negative, the difference distance on the second vertical light-receiving tube is positive, and the difference distance on the horizontal light-receiving tube is negative (Numerical Formula 4), and calculates the instrument height from a sum of a height change of the light receiver center obtained by using a trigonometric function of an absolute value of the difference distance on the horizontal light-receiving tube, the height of the laser light, and the center separation distance when the difference distance on the first vertical light-receiving tube is positive, the difference distance on the second vertical light-receiving tube is negative, and the difference distance on the horizontal light-receiving tube is negative, or when the difference distance on the first vertical light-receiving tube is negative, the difference distance on the second vertical light-receiving tube is positive, and the difference distance on the horizontal light-receiving tube is positive (Numerical Formula 5).

According to a survey system of a fourth aspect, in any one of the first to third aspects, the survey system further comprises a pair of left and right handles extending rearward and configured to be slidably locked in a vertical direction on a rear surface of the laser-light receiver, wherein the center separation distance is locked by fixing the handles to hooks provided in the surveying instrument.

According to a survey system of a fifth aspect, in any one of t first to fourth aspects, preferably, an accommodation recess is formed on a rear surface of the laser-light receiver to avoid interference with a display operation unit and a telescope provided in the surveying instrument.

According to a sixth aspect, there is provided a laser-light receiver that receives laser light emitted horizontally at a certain height from a certain measurement reference point and is fixed to a front surface of a surveying instrument installed at another measurement reference point, the laser-light receiver comprising: as light receiving sensors, a first vertical light-receiving tube, a second vertical light-receiving tube, and a horizontal light-receiving tube, the first and second vertical light-receiving tubes, and the horizontal light-receiving tube, each having a columnar light guide, light receiving units disposed at both ends of the light guide, a light coupling layer configured to divide the laser light toward the both ends of the light guide, and the first vertical, the second vertical and the horizontal light-receiving tubes being disposed in an H-shape; and an arithmetic processing unit connected to the light receiving units, wherein the arithmetic processing unit is configured to specify a collision position of the laser light from each of light reception signals of the light receiving units, and detects a difference distance from the center position to the collision position and whether the difference distance is on a positive side or a negative side with respect to a center position of a length of the light guide, and measures an instrument height of the surveying instrument based on the height of the laser light, a center separation distance between a light receiver center of the light receiver and an instrument center of the surveying instrument in a vertical direction, and the difference distance according to a combination of the positive and negative difference distances on the first vertical light-receiving tube, the second vertical light-receiving tube, and the horizontal light-receiving tube.

Brief Description of Drawings

FIG. 1 is a diagram of an external perspective view of a survey system according to an embodiment of the present invention.

FIG. 2 is a front view of a surveying instrument of the survey system.

FIG. 3 is a side view of the surveying instrument.

FIG. 4A is a rear view of a laser-light receiver of the survey system.

FIG. 4B is a side view of the laser-light receiver.

FIG. 4C is a plan view of the laser-light receiver.

FIG. 5 is a diagram illustrating a light receiving sensor of the light receiver.

FIG. 6 is a configuration block diagram of the survey system.

FIG. 7 is a diagram illustrating calculation of an instrument height when the light receiver has no inclination.

FIG. 8 is a diagram illustrating detection of a change in inclination to the left and right by using the light receiver.

FIG. 9 is a diagram illustrating calculation of the instrument height when the light receiver has an inclination.

Advantageous Effects of Invention

The present disclosure enables measurement of the instrument height of a surveying instrument by using a laser-light receiver that receives horizontal laser light from a rotating laser device and performs leveling.

Description of Embodiments

Next, a preferred embodiment of the present invention will be described with reference to the drawings. In the following description of the embodiment, the same type of configuration is denoted by the same name, and redundant description will be omitted as appropriate.

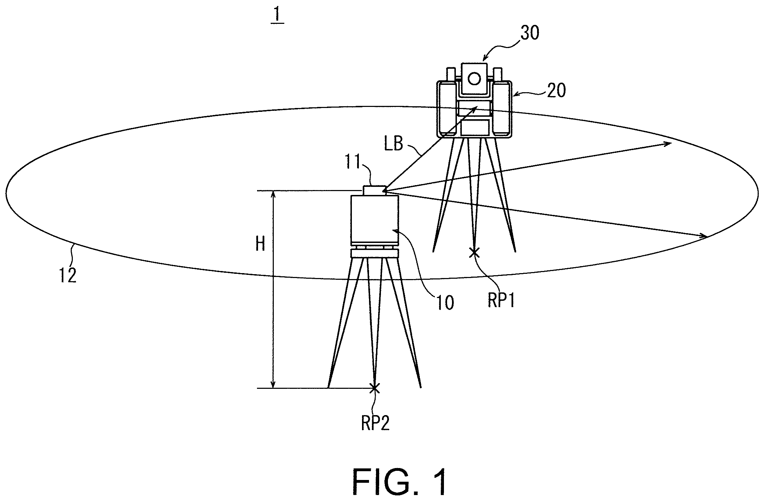

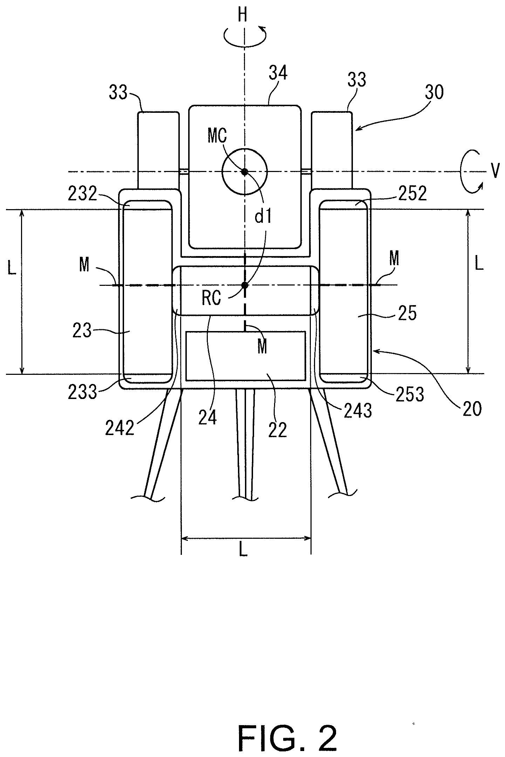

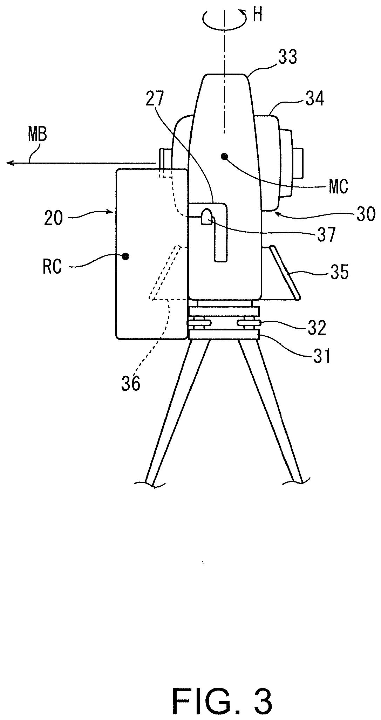

FIG. 1 is an external perspective view of a survey system 1 according to an embodiment of the present invention. FIG. 2 is a front view of a surveying instrument of the same survey system 1, and FIG. 3 is a side view of the surveying instrument of the same survey system 1. The survey system 1 includes a rotating laser device 10, a laser-light receiver (hereinafter, simply referred to as light receiver) 20, and a surveying instrument 30.

The rotating laser device 10 comprises a rotating head 11 including a laser-light source such as a light emitting diode (LED), a semiconductor laser (LD), or a super luminescent diode (SLED) . As illustrated in FIG. 1, the rotating laser device 10 is set up at a measurement reference point RP2 on the ground (plane) of a surveying site via a tripod and a leveling stand. The rotating head 11 emits pulsed light intensity-modulated to a predetermined frequency as laser light LB and rotates the rotating head 11 to rotate the laser light LB, thereby forming a horizontal reference plane 12 which has a certain height H from the measurement reference point RP2.

The surveying instrument 30 is implemented with, for example, a motor-driven total station or a three-dimensional laser scanner. As illustrated in FIG. 1, the surveying instrument 30 is installed at another measurement reference point RP1 on the ground (plane) of the surveying site via a tripod. As illustrated in FIGS. 2 and 3, the surveying instrument 30 includes a leveling stand 31 on the tripod, a base portion 32, a bracket portion 33, and a telescope 34. The base portion 32 is detachably attached to the leveling stand 31. The bracket portion 33 is provided on the base portion 32 and configured to horizontally rotate by 360° about an axis H-H. The telescope 34 is provided in a central recess of the bracket portion 33 and configured to vertically rotate about an axis V-V. The surveying instrument 30 includes a main display operation unit 35 on the rear surface of the bracket portion 33 and a subsidiary display operation unit 36 on the rear surface of the bracket portion 33. Both the main display operation unit 35 and the subsidiary display operation unit 36 are implemented with touch-panel liquid crystal displays and enable operation of the surveying instrument 30 and display of measurement results. The surveying instrument 30 emits distance-measuring light MB (see FIG. 3) from the telescope 34 to receive reflected light from a measurement object and measures a distance to and angle of the measurement object according to a phase difference or a time-of-flight difference of light reception signals. The surveying instrument 30 has the instrument center MC located within the telescope 34. The instrument center MC is a measurement starting point of the distance-measuring light MB and is set on the axis H-H and the axis V-V.

The light receiver 20 is fixed to the front surface of the surveying instrument 30, and, as illustrated in FIG. 2, the light receiver 20 includes a case 21, a first vertical light-receiving tube 23, a horizontal light-receiving tube 24, a second vertical light-receiving tube 25, and a display operation unit 22, which are disposed on the front surface of the case 21. The display operation unit 22 is implemented with a touch-panel liquid crystal display and is arranged in a remaining space where the light receiving tubes 23, 24, and 25 do not occupy. The display operation unit enables operation of the light receiver 20 and display of a measurement result.

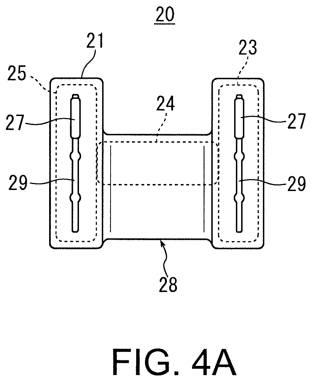

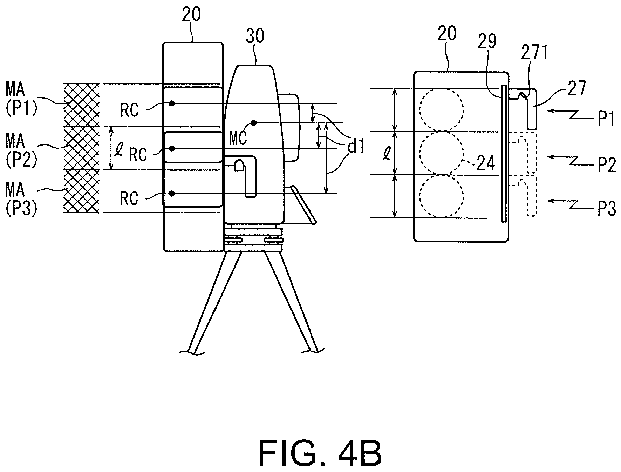

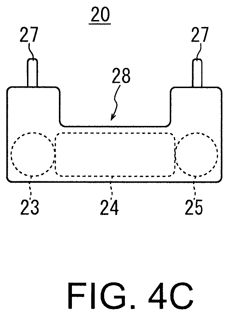

FIG. 4A is a rear view of the light receiver 20, FIG. 4B is a right-side view of the light receiver 20, and FIG. 4C is a top view of the light receiver 20. The light receiver 20 includes a pair of left and right handles 27 extending rearward on the rear surface of the case 21. Each handle 27 has an engagement portion 271 (see FIG. 4B) notched in an angular or semicircular shape, on an inner surface. As illustrated in FIG. 3, the surveying instrument 30 has hooks 37 on the left and right side surfaces of the bracket portion 33, and the hooks 37 fix the handles 27 in a state of being centered on the notches of the engagement portions 271. As illustrated in FIG. 4A, the case 21 has known slide lock mechanisms 29 for the handle 27, the slide lock mechanisms 29 which are formed in the vertical direction on the rear surface of the case 21. This allows the handles 27 to move and hook to a first position P1, a second position P2, and a third position P3 as illustrated in FIG. 4B. The first position P1 is a position where the engagement portions 271 of the handles 27 are disposed above the second position P2 by a diameter $\ell$ of the horizontal light-receiving tube 24, and the third position P3 is a position where the engagement portions 271 of the handles 27 are disposed below the second position P2 by the diameter $\ell$ of the horizontal light-receiving tube 24. Moving the handles 27 enables position adjustment of the light receiver 20 in the vertical direction with respect to the surveying instrument 30, that is, position adjustment of the horizontal light-receiving tube 24 in the vertical direction. This allows the light receiver 20 to expand its measurable range MA (see FIG. 4B) in accordance with the height of the laser light LB. Note that removing the handles 27 from the hooks 37 allows the light receiver 20 to be detached from the surveying instrument 30, thereby allowing separate use of the light receiver 20 and the surveying instrument 30 in a surveying site.

As illustrated in FIGS. 4A and 4C, the light receiver 20 has an accommodation recess 28 which is vertically formed in the central portion of the rear surface of the case 21 to avoid interference between: the subsidiary display operation unit 36 of the surveying instrument 30 and the light receiver 20; and the telescope 34 of the surveying instrument 30 and the light receiver 20.

The light receiver 20 has an H-shaped groove (not illustrated) formed in the front surface of the case 21 and the H-shaped groove accommodates the first vertical light-receiving tube 23, the horizontal light-receiving tube 24, and the second vertical light-receiving tube 25, which are light receiving sensors, as illustrated in FIG. 2. Specifically, the first vertical light-receiving tube 23, the second vertical light-receiving tube 25, and the horizontal light-receiving tube 24 are arranged in an H-shape such that the central axis of the horizontal light-receiving tube 24 is aligned with a center position M of a length L of each of the first vertical light-receiving tube 23 and the second vertical light-receiving tube 25, thereby the center position M of the length L of the horizontal light-receiving tube 24 matches a light-receiver center RC. The center position M of the first vertical light-receiving tube 23 and the second vertical light-receiving tube 25, the center position M of the horizontal light-receiving tube 24, and the position of the light-receiver center RC in the horizontal light-receiving tube 24 are measured in advance and stored as known numerical values in a storage unit 203 that will be described later. In addition, fixing the light receiver 20 to the surveying instrument 30 (fixing the handles 27 to the hooks 37) fixes a positional relationship in the vertical direction between the light-receiver center RC of the light receiver 20 and the instrument center MC of the surveying instrument 30. Fixing the light receiver 20 to the surveying instrument 30 causes the light-receiver center RC and the instrument center MC to separate from each other by a center separation distance d1 in the vertical direction. The center separation distance d1 is measured in advance and stored in the storage unit 203 described later as a known numerical value. The center separation distance d1 is measured at three positions of the first position P1, the second position P2, and the third position P3 illustrated in FIG. 4B, and is stored in the storage unit 20.

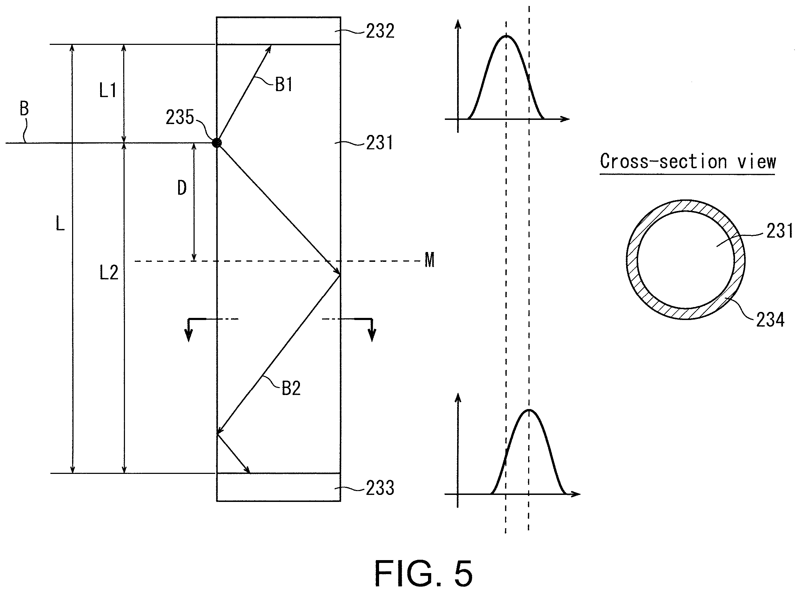

Here, the first vertical light-receiving tube 23, the horizontal light-receiving tube 24, and the second vertical light-receiving tube 25, which are light receiving sensors of the light receiver 20, are described in detail. The first and second vertical light-receiving tube 23, 25 and the horizontal light-receiving tube 24 have the same configuration although the first and second vertical light-receiving tube 23, 25 are disposed vertically along their axis whereas the horizontal light-receiving tube 24 is disposed horizontally along its axis. Thus, the configuration of the light receiving sensor will be described using the first vertical light-receiving tube 23 as a representative. FIG. 5 is a diagram illustrating the light receiving sensor (first vertical light-receiving tube 23) of the light receiver 20, and illustrates a side surface of the first vertical light-receiving tube 23. In FIG. 5, the left side corresponds to a front surface of the case 21, which receives the laser light LB.

The first vertical light-receiving tube 23 includes a columnar light guide 231, a light receiving unit 232 which is disposed at one end of the light guide 231, and a light receiving unit 233 which disposed at the other end. The light receiving units 232 and 233 are implemented with e.g., photodiodes, avalanche photodiodes (APD), or equivalent photoelectric conversion elements. The light receiving units 232 and 233 detect light-reception signals which are processed by an arithmetic processing unit 201, which will be described later. The light guide 231 is made of a transparent material, e.g., glass or quartz, or a resin such as acrylic or polycarbonate, although the material is not limited thereto as long as the light guide 231 guides the laser light LB in its body. The light guide 231 has a prescribed length L and has a cylinder shape, such as a cylinder, an elliptical cylinder, or any columnar shape capable of guiding light through total reflection. The light guide 231 has a light coupling layer 234 thereon (see a cross-sectional view). The light coupling layer 234 couples the laser light LB to the light guide 231 by using principles of diffraction, refraction, scattering, reflection, dispersion, and/or fluorescence of the light (the laser light is incident into the light guide without being reflected outward of the light guide). The light coupling layer 234 is formed by, for example, applying a coating material in which fluorescent particles are dispersed in a solution to the surface of the light guide 231 or providing a resin layer containing fluorescent particles on the surface of the light guide 231.

As illustrated in FIG. 5, when the laser light LB collides with the light guide 231, at a collision position 235, the light coupling layer 234 couples the laser light LB into the light guide 231 and divides into laser light B1 directed to one light receiving unit 232 and laser light B2 directed to the other light-receiving unit 233 in the opposite direction. When the collision position 235 is the center position M in the axial direction of the light guide 231, the distance L1 by which the laser light B1 travels and the distance L2 by which the laser light B2 travels are the same, so that the light reception signals of the light receiving units 232 and 233 have waveforms coincide with each other. However, when the collision position 235 deviates from the center position M of the light guide 231, the distances L1 by which the laser light B1 travels and the distances L2 by which the laser light B2 travels are different, so that the light reception signals of the light receiving units 232 and 233 have waveforms deviating from each other. For example, in FIG. 5, since the collision position 235 is above the center position M of the light guide 231 and the distance L1 is shorter than the distance L2, the light reception signal of the light receiving unit 232 is delayed from the light reception signal of the light receiving unit 233. The arithmetic processing unit 201 calculates the distances L1 and L2 from a time difference or a phase difference between the light reception signals, the prescribed length L, and a light propagation speed of the light guide 231 to specify the collision position 235. In addition, the arithmetic processing unit 201 detects on which side the collision position 235 is located with respect to the center position M. The arithmetic processing unit 201 also calculates a difference distance D of the collision position 235 from the center position M based on the prescribed length L and the distance L1 or L2. For example, in FIG. 5, D is obtained from L/2-L1 or L2-L/2.

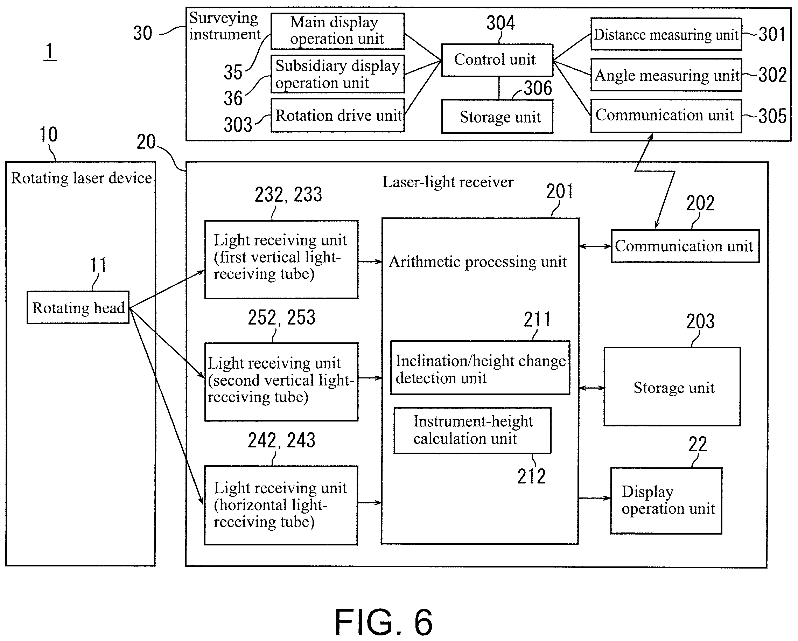

FIG. 6 is a configuration block diagram of the survey system 1. As described above, the rotating laser device 10 includes the rotating head 11 that emits the laser light LB. The light receiver 20 includes an arithmetic processing unit 201, a communication unit 202, a storage unit 203, the above-described light receiving units (of the first vertical light-receiving tube 23) 232 and 233, light receiving units (of the second vertical light-receiving tube 25) 252 and 253, light receiving units (of the horizontal light-receiving tube 24) 242 and 243, and a display operation unit 22. The surveying instrument 30 includes a rotation drive unit 303, a distance measuring unit 301, an angle measuring unit 302, a control unit 304, a communication unit 305, a storage unit 306, and the main display operation unit 35 and the subsidiary display operation unit 36 described above. The rotation drive unit 303 is implemented with a motor that horizontally rotates the bracket portion 33 and a motor that vertically rotates the telescope 34. The distance measuring unit 301 is configured to emit and receive the distance-measuring light MB to measure a distance to a measurement target object. The angle measuring unit 302 is implemented with rotary encoders that measure rotation angles of the bracket portion 33 and the telescope 34 at the time of distance measurement. The communication unit 305 can wirelessly communicate with the communication unit 202 of the light receiver 20, and may be implemented with, e.g., Bluetooth (registered trademark), various wireless LAN standards, infrared communication, a mobile phone line, and other wireless lines.

Since the rotating laser device 10 and the surveying instrument 30 may have known configurations, the configuration of the light receiver 20 as a feature of the present embodiment will be described in detail.

The storage unit 203 is implemented with, for example, random access memory (RAM) and read only memory (ROM) as a main storage device, and a hard disk drive (HDD) as an auxiliary storage device. The storage unit 203 stores processing programs executed by the arithmetic processing unit 201.

The arithmetic processing unit 201 is implemented with an integrated circuit on which at least a central processing unit (CPU) and a memory (RAM and ROM) are mounted on, such as a set of integrated circuits, a microcontroller, and a microprocessor.

The arithmetic processing unit 201 includes functional units of an inclination/height-change detection unit 211 and an instrument-height calculation unit 212. Each functional unit is implemented with an electronic circuit such as a CPU; an application specific integrated circuit (ASIC); or a programmable logic device (PLD), e.g., a field programmable gate array (FPGA).

The inclination/height-change detection unit 211 receives light reception signals from the light receiving units 232, 233, 242, 243, 252, and 253 (see FIG. 2) of the first vertical light-receiving tube 23, the horizontal light-receiving tube 24, and the second vertical light-receiving tube 25, and detects respective difference distances D23, D24, and D25, taking into account signs of their values. The instrument-height calculation unit 212 calculates an instrument height h of the surveying instrument 30 according to a state detected by the inclination/height-change detection unit 211. Details thereof will be described below.

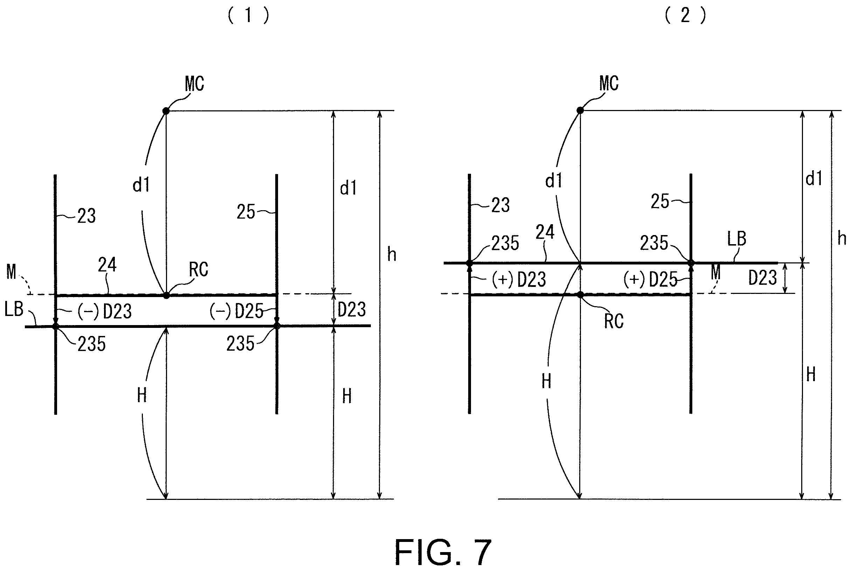

FIG. 7 is a diagram for illustrating calculation of the instrument height h when the light receiver 20 has no inclination. When the light receiver 20 has no inclination, as illustrated in (1) of FIG. 7, the light-receiver center RC being higher than the laser light LB causes the collision position 235 to deviate to a position lower than the center position M in both the first vertical light-receiving tube 23 and the second vertical light-receiving tube 25. This causes phase difference between the light-reception signals in the light receiving units 232 and 233 and phase difference between the light-reception signals in the light receiving units 252 and 253. Thus, the inclination/height-change detection unit 211 detects the negative difference distances D23 and D25 on the light receiving unit 233 (253) side lower than the center position M. As illustrated in (2) of FIG. 7, the light-receiver center RC being lower than the laser light LB causes the collision position 235 to deviate to a position higher than the center position M in both the first vertical light-receiving tube 23 and the second vertical light-receiving tube 25. Thus, the inclination/height-change detection unit 211 detects the positive difference distances D23 and D25 on the light receiving unit 232 (252) side higher than the center position M.

When the inclination/height-change detection unit 211 detects the negative difference distances D23 and D25 from the first vertical light-receiving tube 23 and the second vertical light-receiving tube 25, as illustrated in (1) of FIG. 7, the instrument-height calculation unit 212 receives the detection result of and calculates the instrument height h from Numerical Formula 1 by using the height H of the laser light LB, the difference distance D23 (or D25) detected by the vertical light-receiving tubes 23 and 25, and the center separation distance d1 between the light-receiver center RC and the instrument center MC. Here, an absolute value is used for D23 (D25).

[Numerical Formula 1]

$$h = H + d1 + D23$$

or

$$h = H + d1 + D25$$

On the other hand, when the inclination/height-change detection unit 211 detects the positive difference distances D23 and D25 from the first vertical light-receiving tube 23 and the second vertical light-receiving tube 25, as illustrated in (2) of FIG. 7, the instrument-height calculation unit 212 calculates the instrument height h from Numerical Formula 2 by using the height H of the laser light LB; the difference distance D23 (or D25) detected by the vertical light-receiving tube 23 (or the difference distance D25 detected by the vertical-light receiving tube 25), and the center separation distance d1 between the light-receiver center RC and the instrument center MC.

[Numerical Formula 2]

$$h = H + d1 - D23$$

or

$$h = H + d1 - D25$$

In Numerical Formulas 1 and 2, when the handles 27 are slid, the value of the center separation distance d1 is updated on the display operation unit 22 according to a position of the handle 27.

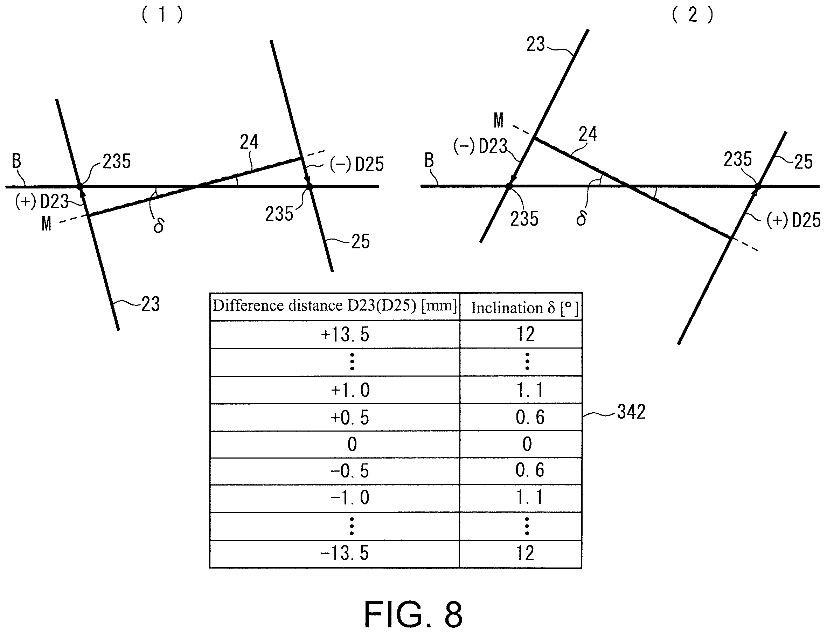

FIGS. 8 to 9 illustrate calculation of the instrument height h when the light receiver 20 has an inclination. As illustrated in (1) of FIG. 8, the light receiver 20 being inclined to the left causes the collision position 235 to deviate to a position higher than the center position M in the first vertical light-receiving tube 23, and causes the collision position 235 to deviate to a position lower than the center position M in the second vertical light-receiving tube 25. Thus, the inclination/height-change detection unit 211 detects the positive difference distance D23 on the light receiving unit 232 side higher than the center position M and detects the negative difference distance D25 on the light receiving unit 253 side lower than the center position M. As illustrated in (2) of FIG. 8, the light receiver 20 being inclined to the right causes the collision position 235 to deviate to a position lower than the center position M in the first vertical light-receiving tube 23, and causes the collision position 235 to deviate to a position higher than the center position M in the second vertical light-receiving tube 25. Thus, the inclination/height-change detection unit 211 detects the negative difference distance D23 on the light receiving unit 233 side lower than the center position M and detects the positive difference distance D25 on the light receiving unit 252 side higher than the center position M. In this case, the difference distance D23 (D25) becomes longer as the left-right inclination increases, and the difference distance D23 (D25) and an inclination angle $\delta$ correspond one-to-one. Thus, storing a left-right-inclination detection table 342 (see FIG. 8) which records the correspondence relationship between the difference distance D23 (D25) and the left-right inclination angle $\delta$ in the storage unit 203 enables calculation of the left-right inclination angle $\delta$ corresponding to the value of the difference distance. FIG. 8 is the left-right-inclination detection table 342 with a resolution in units of 0.5 mm. The left-right-inclination detection table 342 records the inclination angle $\delta$ corresponding to each of the difference distance D23(D25), in which the difference distance D23 (D25) at the center position M of the vertical light-receiving tube 23 (25) is set 0 [mm], the difference distance D23 (D25) detected on the upper light-receiving unit 232 (252) side with respect to the center position M is positive, the difference distance D23 (D25) detected on the lower light-receiving unit 233 (253) side with respect to the center position M is negative.

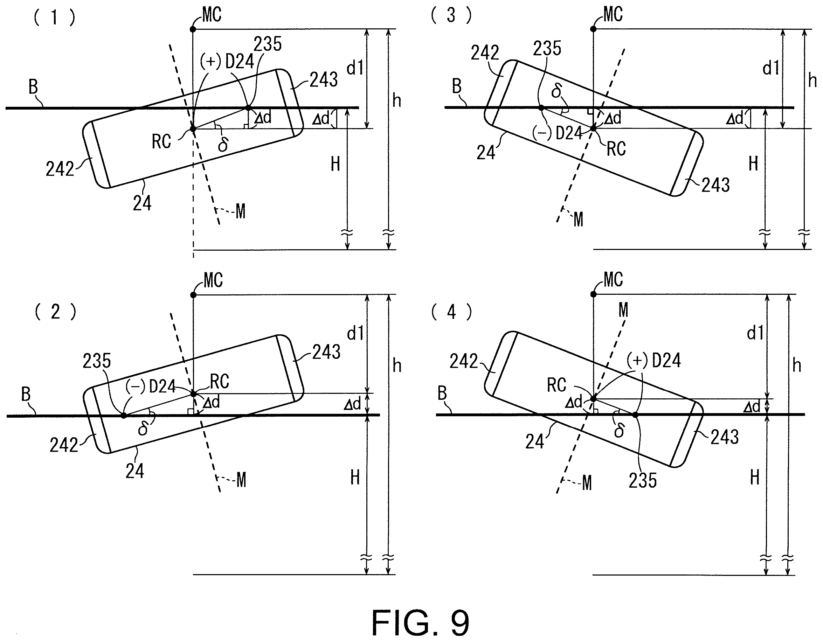

The inclination/height-change detection unit 211 assumes that the left light-receiving unit 242 side is negative, and the right light-receiving unit 243 side is positive with respect to the center position M of the horizontal light-receiving tube 24. As illustrated in (1) of FIG. 9, when the light receiver 20 is inclined to the left so that the collision position 235 deviates to a position higher than the light-receiver center RC, the inclination/height-change detection unit 211 detects the positive difference distance D24 on the light-receiving unit 243 side. As illustrated in (2) of FIG. 9, when the light receiver 20 is inclined to the left so that the collision position 235 deviates to a position lower than the light-receiver center RC, the inclination/height-change detection unit 211 detects the negative difference distance D24 on the left light-receiving unit 242 side. As illustrated in (3) of FIG. 9, when the light receiver 20 is inclined to the right so that the collision position 235 deviates to a position higher than the light-receiver center RC, the inclination/height-change detection unit 211 detects the negative difference distance D24 on the light receiving unit 242 side. As illustrated in (4) of FIG. 9, when the light receiver 20 is inclined to the right so that the collision position 235 deviates to a position lower than the light-receiver center RC, the inclination/height-change detection unit 211 detects the positive difference distance D24 on the light-receiving unit 243 side. A height change $\Delta d$ of the light-receiver center RC is obtained from Numerical Formula 3 which uses a trigonometric function. Here, Numerical Formula 3 uses the absolute value of D24.

[Numerical Formula 3]

$$\Delta d = D24 \sin \delta$$

where $\Delta d$: height change

    D24: difference distance detected by horizontal light-receiving tube
    $\delta$: inclination angle in left-right direction of laser-light receiver

Since the light-receiver center RC is located below the laser light LB when: the inclination/height-change detection unit 211 detects a positive value of the difference distance D23 on the first vertical light-receiving tube 23, a negative value of the difference distance D25 on the second vertical light-receiving tube 25, and a positive value of the difference distance D24 on the horizontal light-receiving tube 24 as illustrated in (1) of FIG. 9; and the inclination/height-change detection unit 211 detects a negative value of the difference distance D23 on the first vertical light-receiving tube 23, a positive value of the difference distance D25 on the second vertical light-receiving tube 25, and a negative value of the difference distance D24 on the horizontal light-receiving tube 24 as illustrated in (3) of FIG. 9, such detection causes the instrument-height calculation unit to calculate the instrument height h of the surveying instrument 30 from Numerical Formula 4 with using the height H of the laser light LB, the center separation distance d1 between the light-receiver center RC and the instrument center MC, and the height change $\Delta d$ of the light-receiver center RC that is obtained from Numerical Formula 3 based on the difference distance D24 on the horizontal light-receiving tube 24.

[Numerical Formula 4]

$$h = H + d1 - \Delta d$$

On the other hand, the light-receiver center RC is located above the laser light LB when: the inclination/height-change detection unit 211 detects a positive value of the difference distance D23 on the first vertical light-receiving tube 23, a negative value of the difference distance D25 on the second vertical light-receiving tube 25, and a negative value of the difference distance D24 on the horizontal light-receiving tube 24 as described in (2) on FIG. 9; and the inclination/height-change detection unit 211 detects a negative value of the difference distance D23 on the first vertical light-receiving tube 23, a positive value of the difference distance D25 on the second vertical light-receiving tube 25, and a positive value of the difference distance D24 on the horizontal light-receiving tube 24 as described in (4) of FIG. 9. This causes the instrument-height calculation unit 212 to calculate the instrument height h of the surveying instrument 30 from Numerical Formula 5 using the height H of the laser light LB, the center separation distance d1 between the light-receiver center RC and the instrument center MC, and the height change $\Delta d$ of the light-receiver center RC that is obtained from Numerical Formula 3 based the difference distance D24 on the horizontal light-receiving tube 24.

[Numerical Formula 5]

$$h = H + d1 + \Delta d$$

In Numerical Formulas 4 and 5, when the handles 27 are slid, the value of the center separation distance d1 is updated on the display operation unit 22 according to the position of the handle 27.

Upon calculating the instrument height h using Numerical Formulas 1, 2, 4, and 5, the instrument-height calculation unit 212 transmits the instrument height h to the surveying instrument 30 via the communication unit 202. The surveying instrument 30 receives the instrument height h via the communication unit 305 and stores the instrument height h in the storage unit 306.

As described above, according to the survey system 1 of the present embodiment, aligning and integrating the laser-light receiver 20 which includes the first vertical light-receiving tube 23, the second vertical light-receiving tube 25, and the horizontal light-receiving tube 24 in the H-shape as light receiving sensors with the surveying instrument 30 enables accurate measurement of the instrument height of the surveying instrument 30 based on positive/negative detection pattern each light reception signal in the light receiver 20.

The rotating laser device 10 and the light receiver 20 used in the survey system 1 are often used in a surveying site for the purpose of leveling, and the surveying instrument 30 is often used in a surveying site for the purpose of measuring coordinates of a measurement point. In the survey system 1 of the present embodiment, attaching the light receiver 20 which is prepared in a surveying site for leveling to the surveying instrument 30 enables easy measurement of the instrument height of the surveying instrument 30.

In addition, configuring the light receiver 20 and the surveying instrument 30 to be detachable by means of the handles 27 of the light receiver 20 and the hooks 37 of the surveying instrument 30 allows the light receiver 20 to be attached to the surveying instrument 30 only at the time of measuring the instrument height, and detached after the measurement of the instrument height. In the detached state, the light receiver 20 and the surveying instrument 30 can be returned to use for normal applications, which is convenient.

Although the preferred embodiments and modifications of the present invention have been described above, the above is an example of the present invention, and these can be combined on the basis of knowledge of those skilled in the art, and such forms are also included in the scope of the present invention.

Reference Signs List

| 1 | Survey system |
|---|---|
| 10 | Rotating laser device |
| 11 | Rotating head |
| 12 | Horizontal reference plane |
| 20 | Laser-light receiver |
| 21 | Case |
| 22 | Display operation unit |
| 23 | First vertical light-receiving tube |
| 231 | Light guide |
| 232 | Light receiving unit |
| 233 | Light receiving unit |
| 234 | Light coupling layer |
| 235 | Collision position |
| 24 | Horizontal light-receiving tube |
| 242 | Light receiving unit |
| 243 | Light receiving unit |
| 25 | Second vertical light-receiving tube |
| 252 | Light receiving unit |
| 253 | Light receiving unit |
| 27 | Handle |
| 28 | Accommodation recess |
| 29 | Slide lock mechanism |
| 201 | Arithmetic processing unit |

| 202 | Communication unit |
| 203 | Storage unit |
| 211 | Inclination/height-detection unit |
| 212 | Instrument-height calculation unit |
| 30 | Surveying instrument |
| 31 | Leveling stand |
| 32 | Base portion |
| 33 | Bracket portion |
| 34 | Telescope |
| 35 | Main-display operation unit |
| 36 | Subsidiary-display operation unit |
| 37 | Hook |
| 301 | Distance measuring unit |
| 302 | Angle measuring unit |
| 303 | Rotation drive unit |
| 304 | Arithmetic control unit |
| 305 | Communication unit |
| 306 | Storage unit |
| MC | Instrument center |
| d1 | Center separation distance |
| LB | Laser light |
| RC | Light-receiver center |

**Claims**

1. A survey system comprising:

   a rotating laser device configured to horizontally emit laser light at a certain height from a certain measurement reference point;
   a surveying instrument installed at another measurement reference point and having an instrument height from the another reference point to an instrument center; and
   a laser-light receiver configured to be fixed to a front surface of the surveying instrument and to receive the laser light, wherein
   the laser-light receiver includes, as light receiving sensors, a first vertical light-receiving tube, a second vertical light-receiving tube, and a horizontal light-receiving tube, the first and second vertical light-receiving tubes, and the horizontal light-receiving tube, each having a columnar light guide, light receiving units disposed at both ends of the light guide, a light coupling layer configured to divide the laser light toward the both ends of the light guide, and the first vertical, the second vertical and the horizontal light-receiving tubes being disposed in an H-shape, and an arithmetic processing unit connected to the light receiving units, and wherein
   the arithmetic processing unit is configured to
   specify a collision position of the laser light from each of light reception signals of the light receiving units, and detect a difference distance from the center position to the collision position and whether the difference distance is on a positive side or a negative side with respect to a center position of a length of the light guide, and
   measures the instrument height of the surveying instrument based on the height of the laser light, a center separation distance between a light-receiver center of the laser-light receiver and the instrument center of the surveying instrument in a vertical direction, and the difference distance according to a combination of the positive and negative difference distances on the first vertical light-receiving tube, the second vertical light-receiving tube, and the horizontal light-receiving tube.

2. The survey system according to claim 1, wherein

   the arithmetic processing unit
   calculates the instrument height based on a sum of the difference distances on the first and second light-receiving tubes, the height of the laser light, and the center separation distance when the difference distances on the first vertical light-receiving tube and the second vertical light-receiving have the same values and both are negative, and
   calculates the instrument height by subtracting an absolute value of the difference distance from a sum of the height of the laser light and the center separation distance when the difference distances on the first vertical light-receiving tube and the second vertical light-receiving tube have the same values and both are positive.

3. The survey system according to claim 1, wherein

the arithmetic processing unit
calculates the instrument height by subtracting a height change of the light receiver center obtained by using a trigonometric function of an absolute value of the difference distance on the horizontal light-receiving tube from a sum of the height of the laser light and the center separation distance when the difference distance on the first vertical light-receiving tube is positive, the difference distance on the second vertical light-receiving tube is negative, and the difference distance on the horizontal light-receiving tube is positive, or when the difference distance on the first vertical light-receiving tube is negative, the difference distance on the second vertical light-receiving tube is positive, and the difference distance on the horizontal light-receiving tube is negative, and calculates the instrument height from a sum of a height change of the light receiver center obtained by using a trigonometric function of an absolute value of the difference distance on the horizontal light-receiving tube, the height of the laser light, and the center separation distance when the difference distance on the first vertical light-receiving tube is positive, the difference distance on the second vertical light-receiving tube is negative, and the difference distance on the horizontal light-receiving tube is negative, or when the difference distance on the first vertical light-receiving tube is negative, the difference distance on the second vertical light-receiving tube is positive, and the difference distance on the horizontal light-receiving tube is positive.

4. The survey system according to claim 1, further comprises a pair of left and right handles extending rearward and configured to be slidably locked in a vertical direction on a rear surface of the laser-light receiver, wherein the center separation distance is locked by fixing the handles to hooks provided in the surveying instrument.

5. The survey system according to claim 2, wherein an accommodation recess is formed on a rear surface of the laser-light receiver to avoid interference with a display operation unit and a telescope provided in the surveying instrument.

6. A laser-light receiver that receives laser light emitted horizontally at a certain height from a certain measurement reference point and is fixed to a front surface of a surveying instrument installed at another measurement reference point, the laser-light receiver comprising:

as light receiving sensors, a first vertical light-receiving tube, a second vertical light-receiving tube, and a horizontal light-receiving tube, the first and second vertical light-receiving tubes, and the horizontal light-receiving tube, each having a columnar light guide, light receiving units disposed at both ends of the light guide, a light coupling layer configured to divide the laser light toward the both ends of the light guide, and the first vertical, the second vertical and the horizontal light-receiving tubes being disposed in an H-shape; and
an arithmetic processing unit connected to the light receiving units, wherein
the arithmetic processing unit is configured to
specify a collision position of the laser light from each of light reception signals of the light receiving units, and detects a difference distance from the center position to the collision position and whether the difference distance is on a positive side or a negative side with respect to a center position of a length of the light guide, and measures an instrument height of the surveying instrument based on the height of the laser light, a center separation distance between a light receiver center of the light receiver and an instrument center of the surveying instrument in a vertical direction, and the difference distance according to a combination of the positive and negative difference distances on the first vertical light-receiving tube, the second vertical light-receiving tube, and the horizontal light-receiving tube.

## FIG. 1

EP 4 579 184 A1

FIG. 2

**FIG. 3**

FIG. 4A

FIG. 4B

FIG. 4C

FIG. 5

EP 4 579 184 A1

FIG. 6

EP 4 579 184 A1

FIG. 7

( 1 )                                           ( 2 )

| Difference distance D23(D25) [mm] | Inclination δ [°] |
|---|---|
| +13. 5 | 12 |
| ⋮ | ⋮ |
| +1. 0 | 1. 1 |
| +0. 5 | 0. 6 |
| 0 | 0 |
| −0. 5 | 0. 6 |
| −1. 0 | 1. 1 |
| ⋮ | ⋮ |
| −13. 5 | 12 |

FIG. 8

EP 4 579 184 A1

FIG. 9

## INTERNATIONAL SEARCH REPORT

| International application No. |
|---|
| **PCT/JP2023/035366** |

**A. CLASSIFICATION OF SUBJECT MATTER**

*G01C 15/00*(2006.01)i
FI:   G01C15/00 103B; G01C15/00 103D

According to International Patent Classification (IPC) or to both national classification and IPC

**B. FIELDS SEARCHED**

Minimum documentation searched (classification system followed by classification symbols)

G01C15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-181428 A (TOPCON CORP) 05 October 2017 (2017-10-05)<br>entire text, all drawings | 1-6 |
| A | JP 2019-519787 A (HILTI AKTIENGESELLSCHAFT) 11 July 2019 (2019-07-11)<br>entire text, all drawings | 1-6 |
| A | JP 2022-519319 A (TOPCON POSITIONNG SYSTEMS, INC.) 22 March 2022 (2022-03-22)<br>entire text, all drawings | 1-6 |
| A | JP 11-337308 A (NIKON CORP) 10 December 1999 (1999-12-10)<br>entire text, all drawings | 1-6 |
| A | JP 2021-189046 A (SHIMIZU CONSTRUCTION CO LTD) 13 December 2021 (2021-12-13)<br>entire text, all drawings | 1-6 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/035366**

| Patent document cited in search report | | | Publication date (day/month/year) | Patent family member(s) | | | Publication date (day/month/year) |
|---|---|---|---|---|---|---|---|
| JP | 2017-181428 | A | 05 October 2017 | (Family: none) | | | |
| JP | 2019-519787 | A | 11 July 2019 | US | 2019/0154501 | A1 | |
| | | | | WO | 2018/001802 | A1 | |
| | | | | EP | 3264040 | A1 | |
| | | | | CN | 109416252 | A | |
| JP | 2022-519319 | A | 22 March 2022 | US | 2020/0256997 | A1 | |
| | | | | US | 2020/0256998 | A1 | |
| | | | | WO | 2020/163194 | A1 | |
| | | | | WO | 2020/163197 | A1 | |
| | | | | CN | 113412410 | A | |
| | | | | CN | 113518896 | A | |
| JP | 11-337308 | A | 10 December 1999 | (Family: none) | | | |
| JP | 2021-189046 | A | 13 December 2021 | (Family: none) | | | |

Form PCT/ISA/210 (patent family annex) (January 2015)

**EP 4 579 184 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020169921 A

- JP 2017181427 A